# EUROPÄISCHE PATENTANMELDUNG

(11) **EP 2 962 760 A1**
(43) Veröffentlichungstag der Anmeldung: **06.01.2016**
(21) Anmeldenummer: 14175114.9
(22) Anmeldetag: 01.07.2014
(51) Int. Cl.: B01L 9/00, F16B 2/12, B01L 3/00

(54) **Becherverschluss zum Verschliessen eines Prozessgefässes**

(71) Anmelder: Büchi Labortechnik AG, 9230 Flawil (CH)
(72) Erfinder: Hinder, Daniel, 9500 Wil (CH)
(74) Vertreter: Hepp Wenger Ryffel AG

(57) **Zusammenfassung**

Die Erfindung betrifft einen Becherverschluss (1) zum Verschliessen eines Prozessgefässes umfassend eine Überwurfhülse (2) mit einer zentralen Achse (A) und einem Befestigungsmittel (4) zum Befestigen der Überwurfhülse (2) an einem mit korrespondierenden Mitteln ausgestalteten Prozessgefäss (3), und einem Klemmelement (11). Das Klemmelement (11) weist eine Auflagefläche (13) zum Aufnehmen einer korrespondierenden Kontaktfläche eines Gegenstücks auf, wobei das Klemmelement (11) beweglich entlang der Achse (A) zwischen einer vordefinierten ersten und einer vordefinierten zweiten Position in der Überwurfhülse (2) gelagert ist. Des Weiteren betrifft die Erfindung einen Adapter, ein Gefäss und ein Verdampfungssystem.

## Beschreibung

Die Erfindung betrifft einen Becherverschluss zum Verschliessen eines Prozessgefässes, einen Adapter zum Anbringen an ein Prozessgefäss, ein Gefäss und ein Verdampfungssystem gemäss den Oberbegriffen der unabhängigen Ansprüche.

Beim Betrieb eines Verdampfungssystems wird das Prozessgefäss üblicherweise mittels einer Heizeinrichtung erwärmt. Herkömmliche Prozessgefässe sind in der Regel mit einem Kupplungs-/Verschlussstück aus Kunststoff verschraubt. Nachteilig an einer Verbindung aus einem solchen Element und beispielsweise einem Prozessgefäss sind die unterschiedlichen Wärmeausdehnungskoeffizienten der einzelnen Komponenten, welche Spannungen und mangelnde Dichtigkeit an der Verbindungsstelle bei sich verändernden Temperaturen und Drücken sowie frühe Materialermüdung hervorrufen. Des Weiteren sind derartige Verbindungen nachteilig, da sie sich unter Temperatureinfluss lösen und bei Verringerung des angelegten Vakuums ungewollt öffnen können.

EP 0 648 519 offenbart einen zweiteilige Verdampferkolben aus Becherteil und Deckelteil, wobei beide Teile mittels eines Flansches und einer Schraubverbindung verbunden sind. Zwischen Becher- und Deckelteil ist ein Dichtring angeordnet. Nachteilig an bekannten Verbindungssystemen ist, dass eine ausreichende Dichtigkeit nicht sichergestellt wird. Ausserdem wirken bedingt durch unterschiedliche Ausdehnungskoeffizienten der Materialien Kräfte, welche eine Dichtung belasten und/oder verunmöglichen.

Es ist daher Aufgabe der Erfindung, die Nachteile des Stands der Technik zu überwinden.

Insbesondere ist es eine Aufgabe der Erfindung ein Verschluss- bzw. Anschlusssystem bereitzustellen, welches isoliert, eine hohe Dichtigkeit während des gesamten Destillationsvorganges aufweist, materialschonend ist und sich durch eine einfache Handhabbarkeit auszeichnet.

Diese Aufgaben werden durch die in den unabhängigen Ansprüchen aufgeführten Merkmale gelöst.

Die Erfindung betrifft einen Becherverschluss zum Verschliessen eines Prozessgefässes. Der Becherverschluss umfasst eine Überwurfhülse mit einer zentralen Achse und einem Befestigungsmittel zum Befestigen der Überwurfhülse an einem mit korrespondierenden Mitteln ausgestalteten Prozessgefäss, und einem Klemmelement. Das Klemmelement weist eine Auflagefläche zum Aufnehmen einer korrespondierenden Kontaktfläche eines Gegenstücks auf. Dabei ist das Klemmelement beweglich entlang der zentralen Achse zwischen einer vordefinierten ersten und einer vordefinierten zweiten Position in der Überwurfhülse gelagert. Durch die bewegliche Lagerung des Klemmelements ist der Becherverschluss in einer veränderbaren Position positionierbar und nimmt bei Bedarf mechanische Kräfte auf. Mechanische Kräfte werden dabei insbesondere durch die korrespondierende Kontaktfläche des Gegenstücks auf das Klemmelement ausgeübt. Durch die Beweglichkeit zwischen der ersten und der zweiten Position kann das Klemmelement mechanische Kräfte absorbieren, Spannungen reduzieren und für eine hohe Dichtigkeit zwischen der Auflagefläche sorgen, insbesondere der Auflagefläche des Klemmelements, und einer korrespondierender Kontaktfläche, vorzugsweise der Kontaktfläche eines Prozessgefässes. Da durch die bewegliche Lagerung des Klemmelements Spannungen kompensiert werden, ist eine hohe Dichtigkeit der verbundenen Elemente bei verringerter Materialermüdung gewährleistet. Ausserdem können Fertigungstoleranzen aufgenommen werden, so dass sowohl der Becherverschluss als auch das Prozessgefäss günstig hergestellt werden kann.

Das Klemmelement kann mittels eines Federelements, vorzugsweise mittels einer oder mehrere Schraubfedern, in Richtung der ersten Position vorgespannt sein. Ebenso können alternative Federelemente das Klemmelement vorspannen, z.B. Biegefedern, Luftfedern, Elastomerfedern. Durch die Vorspannung in Richtung der ersten Position wird das Klemmelement flexibel gelagert und ist gleichzeitig innerhalb der Überwurfhülse axial verschiebbar. In Abhängigkeit von der Federkonstante des Federelements kann das Klemmelement eine durch die Kontaktfläche eines Gegenstücks auf die Auflagefläche applizierte Kraft aufnehmen. Gleichzeitig wird jedoch ein immerwährender Anpressdruck sichergestellt. Auf diese Weise werden Spannungen reduziert und eine hohe Dichtigkeit zwischen Auflagefläche und Kontaktfläche gewährleistet. Dabei können eine oder mehrere Druckfedern bevorzugt um die zentrale Achse angeordnet sein. Bei einer Anordnung mehrere Druckfedern sind diese bevorzugt in Gruppen von je zwei Druckfedern symmetrisch angeordnet.

Das Befestigungsmittel kann eine Rastnase mit einer Rampe eines Bajonettverschlusses oder ein Gewinde umfassen. Dadurch kann ein korrespondierendes Gegenstück befestigt werden. Mit der Rampe beziehungsweise dem Gewinde kann ein Gegenstück einfach befestigt und eine feste Verbindung hergestellt werden. Das Befestigungsmittel kann passend für unterschiedliche Verbindungselemente ausgestaltet sein, insbesondere für Schraub-, Steck-, Steck-Drehverbindungen. Auf diese Weise ist der Becherverschluss ebenfalls zum Verbinden von beispielsweise Rohren und Rohrleitungen geeignet.

Die Überwurfhülse kann eine Rastkante und das Klemmelement eine korrespondierende Anschlagsnase zum Begrenzen der axialen Bewegung des Klemmelements in der ersten Position aufweisen. Auf diese Weise ist die erste Position des Klemmelements definiert. Die zweite Position wird beispielsweise durch die maximale Kompression der Federelemente definiert.

Die erste und die zweite Position in der Überwurfhülse können durch einen Bewegungsweg beabstandet sein. Ein Bewegungsweg des Klemmelements zwischen der ersten und der zweiten Position kann 0.5 mm bis 3 mm betragen, insbesondere für die Verwendung mit einem Prozessgefäss mit einem Durchmesser von 15 mm (Massstab M=1:5). Ein Bewegungsweg des Klemmelements zwischen der ersten und der zweiten Position kann auch 2 mm bis 10 mm betragen, insbesondere für die Verwendung mit einem Prozessgefäss mit einem Durchmesser von 330 mm (Massstab M=3:1). Grössere Bewegungswege sind durchaus auch möglich. Der Bewegungsweg kann je nach den Dimensionen und Abmessungen des Becherverschlusses unterschiedlich dimensioniert sein. Bei Verwendung eines Prozessgefässes, insbesondere einem Becherkolben, mit einem Durchmesser von 75 mm beträgt der Bewegungsweg bevorzugt 3 mm. Bei Verwendung eines Prozessgefässes, insbesondere einem Becherkolben, mit einem Durchmesser von 110 mm beträgt der Bewegungsweg bevorzugt 4 mm.

Die Überwurfhülse und/oder das Klemmelement können ein Material oder Kombinationen von Materialien umfassen ausgewählt aus der Liste:
i) Eisenwerkstoff, insbesondere Edelstahl 1.4301 , Edelstahl 1.4305, 1.4571, V2A, V4A, Stahl, Eisengusswerkstoffe, Grauguss, Rotguss,
ii) Nichteisenmetall, insbesondere Aluminium, Zink, Bronze, Messing, Titan,
iii) Thermoplast, insbesondere Polyoxymethylen (POM), Polyamid (PA), Polybutylenterephthalat (PBT), Polypropylen (PP), Polyethylen (PE), Polyvinylchlorid (PVC), Polyphenylensulfid (PPS), Polyetheretherketone (PEEK), Polyvinylidenfluorid (PVDF), Polyethylenterephthalat (PETP/PET),
iv) Duroplast, insbesondere Melaminharze, Epoxidharze, Polyester,
v) Fluorkunststoffe, insbesondere Polytetrafluoroethylen (PTFE), fluoriertes Ethylenepropylen (FEP), Perfluoralkoxy (PFA), Polyvinylidenfluorid (PVDF), Ethylen-Tetrafluorethylen (ETFE),
vi) Elastomere, insbesondere Naturkautschuk (NR), StyrolButadien-Kautschuk (SBR), Polynorbornen (PNR), Butylkautschuk (IIR), Ethylenpropylendienmonomer (EPDM), Chloropenkautschuk (CR), Nitril-Butadien-Kautschuk (NBR), Chlor-Sulfat-Polyethylen (CSM), Silikon-Elastomere (MVQ, MFQ), fluoriertes Propylenmonomer (FPM), Perfluoroelastomer (FFPM),
vii) anorganische Werkstoffe, insbesondere Borosilikat 3.3, Glas, Keramik,
viii)Verbundwerkstoffe.

Mit der Verwendung der angeführten Materialien und Kombinationen von Materialen können die Überwurfhülse und/oder das Klemmelement anwendungsspezifisch gefertigt sein. Auf diese Weise werden anforderungsgemässe Eigenschaften, insbesondere hinsichtlich Wärmeleitfähigkeit, Wärmeausdehnung, Stabilität, Chemikalienbeständigkeit und/oder Gewicht, eingebracht.

Der Becherverschluss kann eine Dichtung zum Abdichten zwischen Becherverschluss gegenüber einem korrespondierenden Prozessgefäss umfassen. Durch die Verwendung einer Dichtung kann ein dichtes Verschliessen eines Prozessgefässes gewährleistet werden. Insbesondere in Kombination mit der Vorspannung der Federelemente kann ein immerwährender Anpressdruck erzielt und Dichtigkeit gewährleistet werden.

Die Dichtung kann auf der Auflagefläche des Klemmelements angeordnet oder anordenbar, insbesondere festgemacht, sein. Die Dichtung ist somit zwischen Auflagefläche und Gegenstück einbringbar, bzw. ein fester Bestandteil der Auflagefläche. Auf diese Weise erübrigt sich ein wiederholtes Positionieren der Dichtung beim Montieren von Gegenstücken und vereinfacht so insbesondere die Handhabung des Becherverschlusses und das Anbringen des Becherverschlusses auf einem Prozessgefäss.

Durch ein Anpressen einer Dichtung mittels des Federelements wird der Kontaktbereich aus Auflagefläche des Klemmelements und einer korrespondierenden Auflagefläche, insbesondere eine Kontaktfläche eines Prozessgefässes, abgedichtet. Dabei kann die Dichtung einteilig oder mehrteilig aufgebaut sein. Bevorzugt umfasst die Dichtung einen Dichtring sowie eine Dichtführung. Dadurch schützt die Dichtführung den Dichtring vor einem Kontakt mit Inhalten eines Prozessgefässes und angeschlossener Einheiten, während der Dichtring die für die Dichtwirkung benötigte Elastizität bereitstellt.

Die Dichtung kann ein Polytetrafluorethylen (PTFE) aufweisen. Dadurch ist die Dichtung chemikalienbeständig, einfach zu reinigen und besitzt gute Gleiteigenschaften. Die Dichtung kann ein- oder mehrteilig, bevorzugt zweiteilig aufgebaut sein. Bei einem einteiligen Aufbau besteht die Dichtung aus einem Dichtring. Dabei kann der Dichtring vorzugsweise aus einem oder mehreren Elastomeren, beispielsweise Silikon, Ethylen-Propylen-Dien (EPDM), Polychloropren (CR), Naturkautschuk (NR), gefertigt sein. Bei einem zweiteiligen Aufbau ist die äussere Schicht aus Fluorkunststoff, beispielsweise Polytetrafluorethylen (PTFE) gefertigt und weist damit Chemikalienbeständigkeit, einfache Reinigungseigenschaften und gute Gleiteigenschaften auf. Des Weiteren kann die zweiteilige Dichtung mit einer teilweise umhüllenden Dichtführung oder einer Schutzschicht, welche den Dichtring voll umhüllt, ausgestaltet sein. Fertigungsstoffe zur Herstellung des Dichtrings können vorzugsweise ein oder mehrere Elastomere umfassen, insbesondere Silikon, Ethylen-Propylen-Dien (EPDM), Polychloropren (CR), Naturkautschuk (NR). Bei zweiteiligen Dichtungen ist die Dichtführung bevorzugt aus Fluorkunstsoff, insbesondere aus Polytetrafluorethylen (PTFE), Perfluor-Ethylen-Propylen (FEP) oder (Perfluoralkoxylalkan) PFA, gefertigt.

Die Überwurfhülse und das Klemmelement können eine durchgehende Öffnung in axialer Richtung, insbesondere eine Bohrung in axialer Richtung, aufweisen. Dadurch bilden angeschlossene Einheiten, wie beispielsweise ein Prozessgefäss und eine Dampfdurchführung eines Verdampfungssystems, insbesondere eines Rotationsverdampfers, einen gemeinsamen Raum, insbesondere einen gemeinsamen Reaktions- bzw. Prozessraum. Ein Einfüllen oder Ausleeren/Austreten eines Mediums wird ermöglicht. Bevorzugt ermöglicht diese Form eine Verwendung des Becherverschlusses mit einem Verdampfungssystem, insbesondere einem Rotationsverdampfer.

Ein weiterer Aspekt der Erfindung betrifft einen Adapter zum Anbringen an ein Prozessgefäss. Der Adapter umfasst ein Kupplungsstück und einen Becherverschluss. Der Becherverschluss umfasst eine Überwurfhülse mit einer zentralen Achse und einem Befestigungsmittel zum Befestigen der Überwurfhülse an einem mit korrespondierenden Mitteln ausgestalteten Prozessgefäss, und einem Klemmelement. Das Klemmelement weist eine Auflagefläche zum Aufnehmen einer korrespondierenden Kontaktfläche eines Gegenstücks auf. Dabei ist das Klemmelement beweglich entlang der zentralen Achse zwischen einer vordefinierten ersten und einer vordefinierten zweiten Position in der Überwurfhülse gelagert. Das Kupplungsstück weist eine Kontaktfläche auf, welche zur Auflagefläche des Klemmelements des Becherverschlusses korrespondiert. Ausserdem weist der Adapter eine Dichtfläche auf, welche eine korrespondierende Anschlussfläche eines Prozessgefässes aufnehmen kann. Der Becherverschluss kann wie vorgängig beschrieben ausgestaltet sein. Mit der Bereitstellung des Adapters ist ein Prozessgefäss an korrespondierende Einheiten anbringbar.

Der Adapter kann an der gegenüberliegenden Seite der Dichtfläche ein Verbindungsmittel aufweisen, welches eine Verbindung mit anderen Gerätschaften, beispielsweise einer Dampfdurchführung eines Rotationsverdampfers, erlaubt. Das Verbindungsmittel, welches vorzugsweise am Kupplungsstück positioniert ist, kann dabei in Form eines Flansches bereitgestellt sein. Das Kupplungsstück kann aus Metall, bevorzugt Leichtmetall, gefertigt sein. Ebenso kann das Kupplungsstück aus Glas, bevorzugt aus Borosilikat 3.3, gefertigt sein.

Das Kupplungsstück kann eine durchgehende Öffnung in axialer Richtung, insbesondere eine Bohrung in axialer Richtung, aufweisen. Bevorzugt wird das Kupplungsstück mit durchgehender Öffnung in axialer Richtung mit seinem Verbindungsmittel an einer Durchführung, insbesondere einer Dampfdurchführung eines Verdampfungssystems, angebracht. Auf diese Weise bilden das Prozessgefäss, das Kupplungsstück sowie die Durchführung einen gemeinsamen Raum. Ein geschlossenes Kupplungsstück erlaubt neben dem Verschliessen auch die Verwendung als Aufhängung, beispielsweise als Aufhängung zur Aufbewahrung und/oder als Aufhängung in einem Rotor einer Zentrifuge. Auf diese Weise ist ein Prozessgefäss einfach montierbar oder zu verstauen.

Eine Dichtung kann auf der Dichtfläche des Kupplungsstückes angeordnet oder anordenbar sein, insbesondere festgemacht sein. Dies gewährleistet ein Abdichten zwischen der Dichtfläche des Kupplungsstückes und der korrespondierenden Anschlussfläche eines Prozessgefässes. Die Dichtung kann wie vorgängig beschrieben ausgestaltet sein.

Des Weiteren kann die Überwurfhülse einen Anschlag aufweisen, welcher eine Drehbewegung eines dem Befestigungsmittel der Überwurfhülse korrespondierenden Mittels eines Prozessgefässes begrenzt. Der Anschlag kann derart ausgestaltet sein, dass er als Rückhaltelement für eine Dichtung dient. Gleichzeitig wird das Kupplungsstück befestigt, was ein Montieren sowie die Handhabbarkeit des Adapaters vereinfacht.

Ein weiterer Aspekt der Erfindung betrifft ein Gefäss umfassend ein Prozessgefäss mit einem Becherverschluss oder mit einem Adapter wie vorstehend beschrieben. Dabei weist das Prozessgefäss ein zum Befestigungsmittel der Überwurfhülse korrespondierendes Mittel auf, insbesondere ein oder mehrere Zapfen oder ein Gewinde. Dadurch ist ein einfaches und schnelles Anbringen des Prozessgefässes an der Überwurfhülse möglich.

Das Prozessgefäss kann wahlweise eine Flasche, ein Kolben, ein Becher, eine Becherflasche, ein Becherkolben oder eine andere Ausgestaltung aufweisen. Das Prozessgefäss kann folgende Materialien umfassen: Glas, insbesondere Borosilikat 3.3, Metall, Kunststoff. Auf diese Weise können unterschiedliche Prozessgefässe mit dem vorbeschriebenen Becherverschluss oder Adapter verschlossen oder an anderen Gerätschaften angeschlossen werden.

Des Weiteren betrifft die Erfindung ein Verdampfungssystem, beispielsweise einen Rotationsverdampfer. Das Verdampfungssystem umfasst wenigstens ein Element ausgewählt aus der Liste:
- ein Gefäss wie vorgängig beschrieben,
- einen Adapter wie vorgängig beschrieben,
- einen Becherverschluss wie vorgängig beschrieben.

Das Verdampfungssystem erlaubt ein einfaches und schnelles Anbringen von Gefässen zur Verarbeitung von zu verdampfenden Medien.

Die Erfindung wird im Folgenden anhand von Abbildungen exemplarischer Ausführungsbeispiel näher erläutert. Es zeigen:
- Figur 1:: Perspektivische Explosionsansicht eines erfindungsgemässen Becherverschlusses mit einer Überwurfhülse und einem Klemmelement;
- Figur 2a:: Perspektivische Darstellung der Überwurfhülse auf Figur 1 in einer Ansicht von unten;
- Figur 2b:: Perspektivische Darstellung der Überwurfhülse auf Figur 1 in einer Ansicht von oben;
- Figur 3a:: Perspektivische Darstellung eines Kupplungsstückes;
- Figur 3b:: Schnitt durch das Kupplungsstück aus Figur 3a entlang einer zentralen Achse;
- Figur 4a:: Perspektivische Darstellung eines erfindungsgemässen Gefässes umfassend ein Prozessgefäss, einen Becherverschluss und ein Kupplungsstück;
- Figur 4b:: Schnitt durch das Gefäss aus Figur 4a entlang einer zentralen Achse;
- Figur 4c:: Explosionsansicht des Gefässes aus Figur 4a.

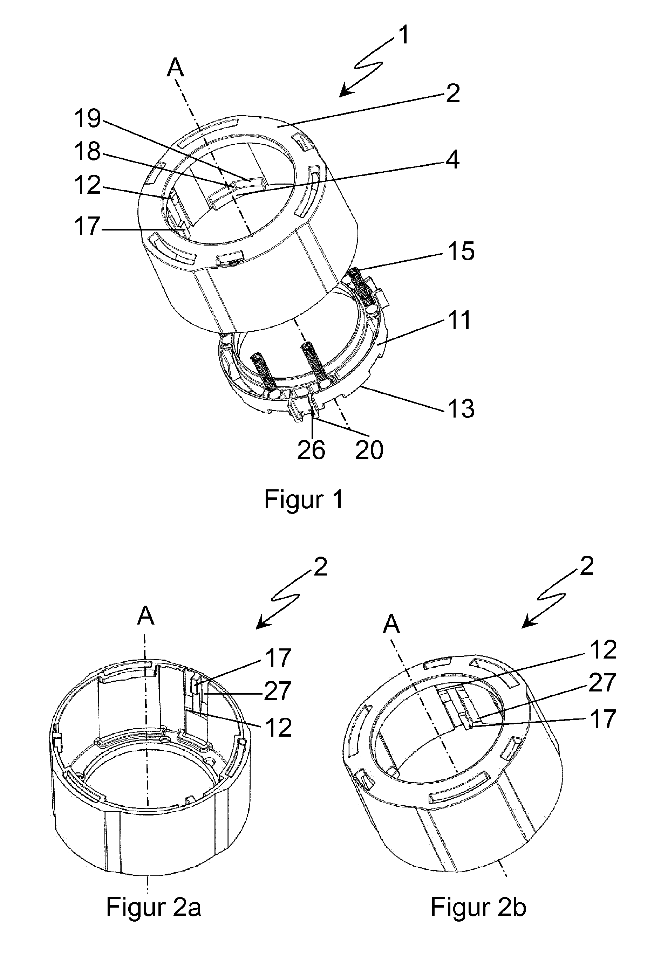

Figur 1 zeigt eine perspektivische Explosionsansicht eines erfindungsgemässen Becherverschlusses 1 umfassend eine Überwurfhülse 2 und ein Klemmelement 11. Das Klemmelement 11 weist sechs Schraubenfedern 15 und eine Auflagefläche 13 zur Aufnahme einer korrespondierenden Fläche auf, beispielsweise einer Dichtung, eines Prozessgefässes oder eines Kupplungsstücks. Die Schraubenfedern 15 sind symmetrisch in drei Gruppen zu je zwei Schraubenfedern 15 angeordnet.

Sowohl die Überwurfhülse 2 als auch das Klemmelement 11 definieren eine zentrale Achse A.

Das Klemmelement 11 ist ringförmig ausgestaltet und weist eine zentrale, axiale Aussparung auf. Selbstverständlich kann das Klemmelement 11 auch durchgängig, also ohne Aussparung ausgestaltet sein. Das Klemmelement 11 ist in die Überwurfhülse 2 einbringbar und darin positionierbar. Dabei ist das Klemmelement 11 beweglich zwischen einer vordefinierten ersten und einer vordefinierten zweiten Position in der Überwurfhülse 2 gelagert. Eine Rastkante 12 dient gleichzeitig einem Einrasten des Klemmelements 11 bei dessen Montage und als Anschlag für eine Anschlagsnase 20 in der ersten definierten Position. Das Klemmelement 11 wird mittels der Schraubfedern in dieser ersten Position vorgespannt.

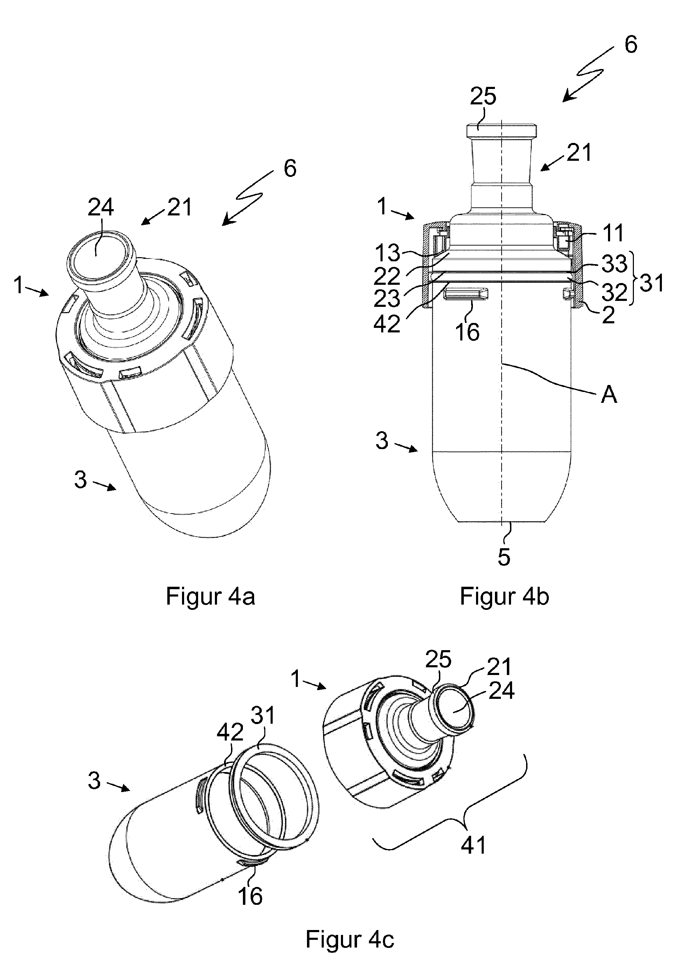

Die Überwurfhülse 2 weist ein Befestigungsmittel 4, welches zu einem Rastmittel 16 beispielsweise eines Prozessgefässes 3 (beides vgl. Figur 4) korrespondiert, und einen Anschlag 17 auf. Drei solche Befestigungsmittel 4 sind symmetrisch an der Innenseite der Überwurfhülse 2 verteilt angeordnet. Das Befestigungsmittel 4 und das korrespondierende Rastmittel bilden eine Art Bajonettverschluss. Zur Verriegelung umfasst das Befestigungsmittel 4 eine Rampe 19 und eine Rastnase 18, welche ein Einrasten eines korrespondierenden Rastmittels ermöglicht. Es sind aber auch andere Verschlussarten, wie beispielsweise ein Schraubverschluss oder eine Steckverbindung, denkbar. Der Anschlag 17 begrenzt in Zusammenwirkung mit dem Rastmittel 16 (vgl. Figur 4) die Drehung des Becherverschlusses 1 relativ zum Prozessgefäss 3 (vgl. Figur 4). Ausserdem dient der Anschlag 17 als Rückhaltemittel für eine Dichtung 31 (vgl. Figur 4). Die Überwurfhülse 2 weist eine zentrale Aussparung in axialer Richtung auf.

Des Weiteren weist die Überwurfhülse 2 mehrere Einführnuten 27 auf (vgl. Figuren 2a und 2b), welche zu drei Paaren symmetrisch an der Innenseite angeordnet sind. Dazu korrespondierend sind auf dem Klemmring 11 Führungsschienen 26 angeordnet, welche bei der Montage des Klemmelements 11 in die Überwurfhülse 2 in die Einführnuten 27 greifen. Die Anschlagsnase 20 dient als Anschlag an der Rastkante 12 nach dem Einrasten des Klemmelements 11 in der Überwurfhülse 2.

Die Überwurfhülse 2 und das Klemmelement 11 sind aus einem Thermoplast gefertigt. Ausserdem sind auch folgende Werkstoffe denkbar: Eisenwerkstoffe, Nichteisenmetalle, Thermoplasten und Duroplasten.

Figuren 2a und 2b zeigen perspektivische Darstellungen der Überwurfhülse 2 aus Figur 1. Nochmals dargestellt ist die Rastkante 12 zum Einrasten der korrespondierenden Anschlagsnase 20 des Klemmelements 11 (beides Figur 1) und der Anschlag 17.

Die Überwurfhülse 2 weist Einführnuten 27 auf, welche zu drei Paaren symmetrisch an der Innenseite angeordnet sind. Ein Paar der Einführnuten 27 fasst jeweils einen Anschlag 17 ein. Die Rastkante 12 begrenzt die Dimensionen der Einführungsnuten 27.

Des Weiteren dient der Anschlag 17 als Rückhalteelement für beispielsweise eine Dichtung 31 nach der Montage eines Adapters 41 (beides Figur 4b).

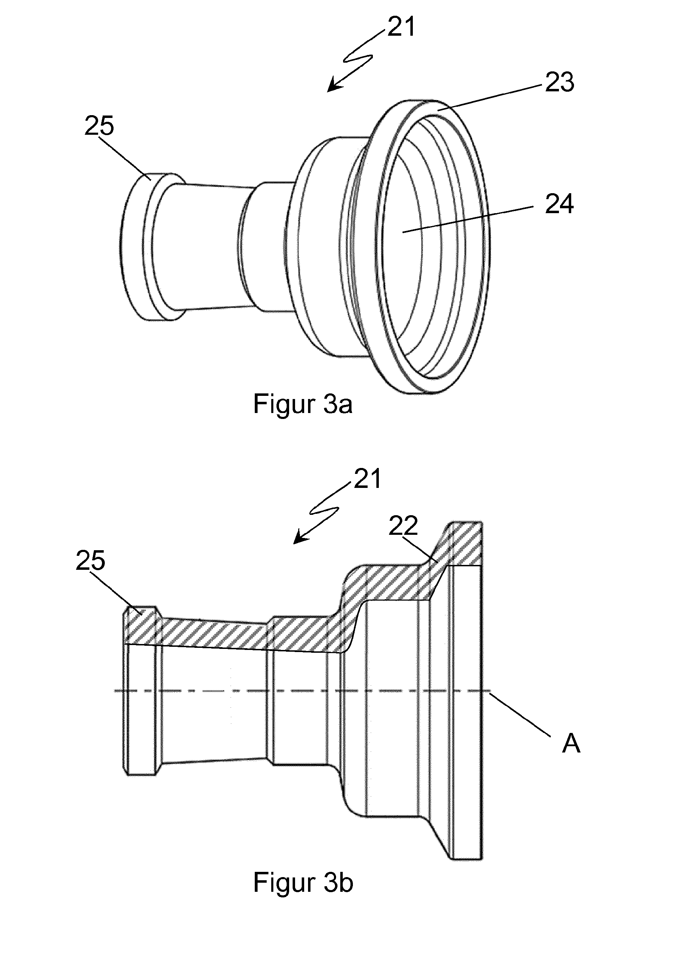

Figur 3a zeigt in einer perspektivischen Darstellung ein Kupplungsstück 21 mit einer zentralen Öffnung 24. Figur 3b zeigt einen Schnitt durch das Kupplungsstück 21 entlang einer zentralen Achse A. Die Öffnung 24 stellt eine Durchführung, insbesondere von Prozess- oder Reaktionsräumen, dar. Das Kupplungsstück 21 weist eine Kontaktfläche 22 zur Aufnahme einer korrespondierenden Fläche, insbesondere zur Aufnahme der Auflagefläche 13 des Klemmelements 11 (beides Figur 1), und eine Dichtfläche 23 zur Aufnahme einer Dichtung 31 oder einer Anschlussfläche 42 eines Prozessgefässes 3 (beides Figur 4), auf.

Das Kupplungsstück 21 ist aus Borosilikat 3.3 gefertigt Auch die folgenden Werkstoff sind wie bereits vorgängig erläutert möglich: Eisenwerkstoffe, Nichteisenmetalle, Thermoplaste, Duroplaste, anorganische Werkstoffe.

Das Kupplungsstück 21 weist ein Verbindungsmittel 25 zum Anbringen an einem Gerät, insbesondere an einer Dampfdurchführung eines Rotationsverdampfers, auf. Das Verbindungsmittel 25 ist flanschförmig ausgestaltet und am gegenüberliegenden Ende der Dichtfläche 23 angeordnet.

Figuren 4a, b und c zeigen ein erfindungsgemässes Gefäss 6 umfassend ein Prozessgefäss 3, den Becherverschluss 1 aus Figur 1 und das Kupplungsstück 21 aus Figur 3a mit einer Dichtung 31. Figur 4a zeigt eine perspektivische Ansicht, Figur 4b einen Schnitt, und Figur 4c eine Explosionsansicht.

Einer Kontaktfläche 22 des Kupplungsstückes 21 liegt die Auflagefläche 13 des Klemmelements 11 auf. Aufgrund der Schraubenfedern 15 (vgl. Figur 1) des Klemmelements 11 ist das Klemmelement 11 gegen die Kontaktfläche 22 des Kupplungsstücks 21 vorgespannt. Somit ist auch das Kupplungsstück 21 gegen die Dichtung 31 vorgespannt und ausserdem axial beweglich in der Überwurfhülse 2 gelagert. Die Dichtfläche 23 des Kupplungsstückes 21 liegt auf der Dichtung 31 auf, welche wiederum auf einer Anschlussfläche 42 des Prozessgefässes 3 aufliegt.

Die Dichtung 31 dichtet einen Innenraum des Gefässes gegen die Umgebung ab. Die Dichtung 31 ist zweiteilig ausgebildet und umfasst einen Dichtring 32 und eine Dichtführung 33. Die Dichtführung 33 umschliesst dabei den Dichtring 32 teilweise und verhindert einen Kontakt zwischen dem Dichtring 32 und Stoffen und/oder Dämpfen im Gefäss. Die Dichtführung 33 ist aus Fluorkunststoff, insbesondere Polyte-trafluorethylen (PTFE), und der Dichtring 32 aus einem oder mehreren Elastomeren gefertigt.

Der Becherverschluss 1 und das Kupplungsstück 21 bilden zusammen einen Adapter 41. Das Kupplungsstück 21 weist ein Verbindungsmittel 25 zum Anbringen an einem Gerät, insbesondere an einem Verdampfungssystem, auf. Der Becherverschluss 1 und das Kupplungsstück 21 weisen eine zentrale durchgehende Öffnung 24 auf.

Das Prozessgefäss 3 ist als Becherkolben mit einer abgeflachten Unterseite 5, welche für das Abstellen des Becherkolbens auf einer Abstellfläche geeignet ist, ausgestaltet. Die Unterseite 5 kann auch eingewölbt ausgestaltet sein. Der Becherkolben weist ein oder mehrere Rastmittel 16 auf, welche mit den Befestigungsmitteln 4 (vgl. Figur 1) der Überwurfhülse 2 korrespondieren, so dass der Adapter 41 auf dem Prozessgefäss 3 anbringbar ist.

Das Prozessgefäss 3 ist aus Glas, insbesondere Borsilikat 3.3, gefertigt. Es sind aber auch andere Werkstoffe wie Eisenwerkstoffe, Nichteisenmetalle, Thermoplaste, Duroplaste und anorganische Werkstoffe denkbar.

In einer bevorzugten Ausführungsform sind das Prozessgefäss 3 und das Kupplungsstück 21 aus Borosilikat 3.3 gefertigt. Bei Erwärmung dehnen sich die vorgenannten Element nur sehr wenig aus (α = 3.3*10⁻⁶ K⁻¹). Bei der Verwendung eines Becherverschlusses 2, 11 aus Kunststoff beträgt die Ausdehnung α = 60*10⁻⁶ K⁻¹. Bei herkömmlichen Verschraubungen löst sich diese Aufgrund des höheren Ausdehnungskoeffizienten (ca. Faktor 20). Die Vorspannung des erfindungsgemässen Becherverschlusses vermittelt durch das Klemmelement/-ring 11 und den Schraubfedern 15 führt dazu, dass die unterschiedlichen Wärmeausdehnungen bei Betrieb ausgeglichen werden, dass das Prozessgefäss 3 durch Aufbringen einer axialen Kraft entlang der Achse A dicht verschlossen ist, wobei die axiale Kraft entlang der Achse A durch einen Anwender nicht beeinflussbar ist, sondern vielmehr durch die Schraubenfedern definiert ist. Somit herrschen am Becherverschluss durchgehend die gleichen Verhältnisse.

## Patentansprüche

1. Becherverschluss (1) zum Verschliessen eines Prozessgefässes umfassend eine Überwurfhülse (2) mit einer zentralen Achse (A) und einem Befestigungsmittel (4) zum Befestigen der Überwurfhülse (2) an einem mit korrespondierenden Mitteln ausgestalteten Prozessgefäss (3), und einem Klemmelement (11), wobei das Klemmelement (11) eine Auflagefläche (13) zum Aufnehmen einer korrespondierenden Kontaktfläche eines Gegenstücks aufweist, **dadurch gekennzeichnet, dass** das Klemmelement (11) beweglich entlang der Achse (A) zwischen einer vordefinierten ersten und einer vordefinierten zweiten Position in der Überwurfhülse (2) gelagert ist.

2. Becherverschluss (1) nach Anspruch 1, **dadurch gekennzeichnet, dass** das Klemmelement (11) mittels eines Federelements, insbesondere einer oder mehrerer Schraubenfedern (15), in Richtung der ersten Position vorgespannt ist.

3. Becherverschluss (1) nach Anspruch 1 oder 2, **dadurch gekennzeichnet, dass** das Befestigungsmittel (4) eine Rastnase (18) mit einer Rampe (19) eines Bajonettverschlusses oder ein Gewinde umfasst.

4. Becherverschluss (1) nach einem der Ansprüche 1 bis 3, **dadurch gekennzeichnet, dass** die Überwurfhülse (2) eine Rastkante (12) und das Klemmelement (11) eine korrespondierende Anschlagsnase (20) zum Begrenzen der axialen Bewegung des Klemmelements (11) in der ersten Position aufweisen.

5. Becherverschluss (1) nach einem der Ansprüche 1 bis 4, **dadurch gekennzeichnet, dass** ein Bewegungsweg des Klemmelements (11) zwischen der ersten und der zweiten Position 0.5 mm bis 3 mm oder 2 mm bis 10 mm beträgt.

6. Becherverschluss (1) nach einem der Ansprüche 1 bis 5, **dadurch gekennzeichnet, dass** die Überwurfhülse (2) und/oder das Klemmelement (11) ein Material oder Kombinationen von Materialien ausgewählt aus der Liste
i) Eisenwerkstoff, insbesondere Edelstahl 1.4301 , Edelstahl 1.4305, Stahl, Grauguss, Rotguss,
ii) Nichteisenmetall, insbesondere Aluminium, Zink, Bronze, Messing,
iii) Thermoplast, insbesondere Polyoxymethylen (POM), Polyamid (PA), Polybutylenterephthalat (PBT), Polypropylen (PP), Polyethylen (PE), Polyphenylensulfid (PPS), Polyetheretherketone (PEEK), Polyvinylidenfluorid (PVDF), Polyethylenterephthalat (PETP/PET),
iv) Duroplast, insbesondere Melaminharze, Epoxidharze, Polyester,
umfasst.

7. Becherverschluss (1) nach einem der Ansprüche 1 bis 6, **dadurch gekennzeichnet, dass** der Becherverschluss (1) eine Dichtung (31) zum Abdichten des Becherverschlusses (1) gegenüber einem korrespondierenden Prozessgefäss (3) umfasst.

8. Becherverschluss (1) nach Anspruch 7, **dadurch gekennzeichnet, dass** die Dichtung (31) auf der Auflagefläche (13) des Klemmelements (11) angeordnet oder anordenbar, insbesondere festgemacht ist.

9. Becherverschluss (1) nach Anspruch 7 oder 8, **dadurch gekennzeichnet, dass** die Dichtung Polytetrafluorethylen (PTFE) aufweist.

10. Becherverschluss (1) nach einem der Ansprüche 1 bis 9,
**dadurch gekennzeichnet, dass** die Überwurfhülse (2) und das Klemmelement (11) ein durchgehenden Öffnung in axialer Richtung aufweisen.

11. Adapter (41) zum Anbringen an ein Prozessgefäss umfassend ein Kupplungsstück (21) und einen Becherverschluss (1) zum Verschliessen eines Prozessgefässes, insbesondere nach einem der Ansprüche 1 bis 10, wobei der Becherverschluss (1) eine Überwurfhülse (2) mit einer zentralen Achse (A) und einem Befestigungsmittel (4) zum Befestigen der Überwurfhülse (2) an einem mit korrespondierenden Mitteln ausgestalteten Prozessgefäss (3), und einem Klemmelement (11) umfasst, wobei das Klemmelement (11) eine Auflagefläche (13) zum Aufnehmen einer korrespondierenden Kontaktfläche eines Gegenstücks aufweist, **dadurch gekennzeichnet, dass** das Klemmelement (11) beweglich entlang der Achse (A) zwischen einer vordefinierten ersten und einer vordefinierten zweiten Position in der Überwurfhülse (2) gelagert ist, und das Kupplungsstück (21) eine Kontaktfläche (22) korrespondierend zur Auflagefläche (13) des Klemmelements (11) des Becherverschlusses (1) und eine Dichtfläche (23) zur Aufnahme einer korrespondierenden Anschlussfläche (42) eines Prozessgefässes (3) aufweist.

12. Adapter (41) nach Anspruch 11, **dadurch gekennzeichnet, dass** das Kupplungsstück (21) eine durchgehende Öffnung aufweist.

13. Adapter (41) nach Anspruch 11 oder 12, **dadurch gekennzeichnet, dass** eine Dichtung (31) auf der Dichtfläche (23) des Kupplungsstückes (21) angeordnet oder anordenbar, insbesondere festgemacht ist.

14. Adapter nach einem der Ansprüche 11 bis 13 **dadurch gekennzeichnet, dass** die Überwurfhülse (2) einen Anschlag (17) aufweist, welcher eine Drehbewegung eines dem Befestigungsmittel (4) der Überwurfhülse (2) korrespondierenden Mittels eines Prozessgefässes (3) begrenzt.

15. Gefäss (6) umfassend ein Prozessgefäss (3) mit einem Becherverschluss (1) nach einem der Ansprüche 1 bis 10 oder mit einem Adapter (41) nach einem der Ansprüche 11 bis 14, wobei das Prozessgefäss (3) zum Befestigungsmittel (4) der Überwurfhülse (2) korrespondierende Mittel aufweist, insbesondere ein oder mehrere Zapfen oder ein Gewinde.

16. Verdampfungssystem umfassend wenigstens ein Element ausgewählt aus der Liste:
- ein Gefäss nach Anspruch 15,
- einen Adapter nach einem der Ansprüche 11 bis 14,
- einen Becherverschluss nach einem der Ansprüche 1 bis 10.
